(19) Europäisches Patentamt / European Patent Office / Office européen des brevets

(11) **EP 3 979 261 B1**

(12) **EUROPEAN PATENT SPECIFICATION**

(45) Date of publication and mention
of the grant of the patent:
**12.06.2024 Bulletin 2024/24**

(21) Application number: **19957744.6**

(22) Date of filing: **25.12.2019**

(51) International Patent Classification (IPC):
**G21C 17/10** (2006.01)     **G21C 9/016** (2006.01)
**G21C 17/00** (2006.01)     G21C 15/18 (2006.01)

(52) Cooperative Patent Classification (CPC):
**G21C 17/001; G21C 9/016;** G21C 15/18;
Y02E 30/30

(86) International application number:
**PCT/CN2019/128264**

(87) International publication number:
**WO 2021/128060 (01.07.2021 Gazette 2021/26)**

(54) **THREE-DIMENSIONAL TEST SYSTEM, AND THREE-DIMENSIONAL TEST DEVICE FOR SIMULATING RPV HEAT EXCHANGE CHARACTERISTICS OF NUCLEAR POWER PLANT**

DREIDIMENSIONALES PRÜFSYSTEM, UND DREIDIMENSIONALE PRÜFVORRICHTUNG ZUR SIMULATION DER RPV-WÄRMEAUSTAUSCHCHARAKTERISTIKA EINER KERNKRAFTANLAGE

SYSTÈME D'ESSAI TRIDIMENSIONNEL, ET DISPOSITIF D'ESSAI TRIDIMENSIONNEL POUR SIMULER DES CARACTÉRISTIQUES D'ÉCHANGE DE CHALEUR D'UNE CUVE SOUS PRESSION DE RÉACTEUR D'UNE CENTRALE NUCLÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.04.2022 Bulletin 2022/14**

(73) Proprietors:
• **China Nuclear Power Technology Research Institute Co., Ltd.**
**Shenzhen, Guangdong 518031 (CN)**
• **China General Nuclear Power Corporation**
**Shenzhen, Guangdong 518028 (CN)**
• **CGN Power Co., Ltd.**
**Shenzen, Guangdong 518028 (CN)**

(72) Inventors:
• **ZHAN, Dekui**
**Shenzhen, Guangdong 518031 (CN)**
• **LIANG, Junming**
**Shenzhen, Guangdong 518031 (CN)**
• **CHEN, Peng**
**Shenzhen, Guangdong 518031 (CN)**
• **XIA, Shaoxiong**
**Shenzhen, Guangdong 518031 (CN)**

• **ZHANG, Huiyong**
**Shenzhen, Guangdong 518031 (CN)**
• **ZHANG, Lei**
**Shenzhen, Guangdong 518031 (CN)**

(74) Representative: **Westphal, Mussgnug & Partner, Patentanwälte mbB**
**Werinherstraße 79**
**81541 München (DE)**

(56) References cited:
**CN-A- 103 187 109     CN-A- 103 594 133**
**CN-A- 104 979 025     CN-A- 105 225 710**
**CN-A- 106 251 919     CN-A- 108 389 635**
**CN-B- 103 594 133     CN-B- 108 389 635**
**KR-A- 20100 125 147     US-A- 3 700 552**

• **NOH SANG W ET AL: "Critical heat flux for APR1400 lower head vessel during a severe accident", NUCLEAR ENGINEERING AND DESIGN, AMSTERDAM, NL, vol. 258, 5 March 2013 (2013-03-05), pages 116-129, XP028524962, ISSN: 0029-5493, DOI: 10.1016/J.NUCENGDES.2012.12.021**

## Description

### Technical Field

The present invention relates to the technical field of nuclear power, more particularly, to a three-dimensional test system, and a three-dimensional test device for simulating RPV heat exchange characteristics of a nuclear power plant.

### Background Art

When a severe accident occurs in a nuclear power plant, a core is exposed and finally melt due to a coolant loss of a primary loop system of the nuclear power plant, and the core corium will eventually collapse into the lower head of RPV (reactor pressure vessel). If the core corium cannot be cooled in time, the corium will eventually melt through the lower head of the RPV because of the core decay heat, thus the core melt falls in the reactor pit and may possibly melt through a bottom plate of a containment, resulting in a large leakage of radioactive substance in the end.

To solve the problems above, a reactor pit water injection system is designed in current nuclear power plant to inject water into the reactor pit to submerge the pit, such that the lower head of the RPV is cooled. The design and construction of the reactor pit water injection system in the prior art is obtained through one-dimensional and two-dimensional test and theoretical design.

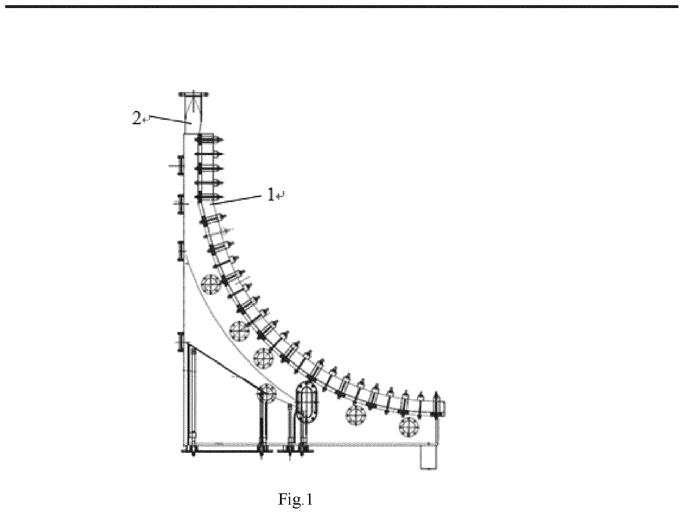

As shown in Fig. 1, a test section in a prior art for processing a two-dimensional heating test consists of a copper heating section 1 and a stainless-steel flow channel 2. The copper heating section 1 is used to simulate a wall surface of the RPV heated by the core melt when an accident occurs, and the stainless-steel flow channel 2 is used to simulate a flow channel outside the lower head of the RPV A width of the copper heating section 1 is the same from the top to the bottom, and a heating rod and a thermocouple are inserted from a side surface and are arranged parallel to a heating surface. During the test, all cooling water entering the flow channel 2 of the test section from an inlet at a bottom of the test section can only flow in one direction from the bottom to the top of the test section in the narrow flow channel, so that the three-dimensional flow state of an outer wall surface of the lower head of the RPV under a real condition cannot be simulated, thereby a great difference is existed with the actual flow condition.

Examples of devices for simulating the heat flux of a nuclear reactor are described in the applications KR 2010 0125147 A and CN 103 594 133 B, as well as in the publication NOH SANG W ET AL: "Critical heat flux for APR1400 lower head vessel during a severe accident", NUCLEAR ENGINEERING AND DESIGN, AMSTERDAM, NL, vol. 258, 5 March 2013, pages 116-129.

## Summary

A technical problem to be solved in the present invention is to provide a three-dimensional test device for simulating PRV heat exchange characteristics when an accident occurs, and a three-dimensional test system for simulating RPV heat exchange characteristics of a nuclear power plant.

A technical solution adopted by the present invention to solve the technical problem is to provide a three-dimensional test device for simulating reactor pressure vessel ,RPV, heat exchange characteristics when an accident occurs, wherein the three-dimensional test device includes a tube portion, a lower head that is hemispherical and connected to a lower end of the tube portion, and a heating assembly disposed in the lower head; and wherein

the tube portion is a non-heating portion; and the heating assembly is disposed in the lower head to form a three-dimensional heating portion.

The lower head is provided with an annular recess on an inner wall surface adjacent to an opening side thereof, and the lower head is separated by the recess into a non-heating section and a heating section respectively on an upper side and a lower side of the recess; the lower head is connected with the tube portion via the non-heating section, and the heating assembly is disposed in the heating section.

Preferably, the heating assembly includes a number of heating rods to heat the lower head, and the heating rods are inserted into the lower head perpendicular to an inner wall surface of the lower head.

Preferably, a number of heating holes are uniformly provided in an inner wall surface of the lower head along a spherical center direction of the lower head; and each heating rod is inserted in a corresponding heating hole.

Preferably, a wall thickness of the lower head is 100mm-120mm; a depth of the heating hole is 85mm-100mm, and an inner diameter of the heating hole is 10mm-15mm; and

a total length of the heating rod is ≤ 120mm, a heating length of the heating rod is 80mm-90mm, and an outer diameter of the heating rod is 10mm -15mm.

Preferably, the heating section includes a number of heating units, and each heating unit has a plurality of the heating rods therein; wherein the heating rods are configured so that powers of the heating rods of the adjacent heating units are different.

Preferably, the three-dimensional test device further includes a sealing assembly disposed between the tube portion and the lower head; the sealing assembly includes a sealing flange, a high temperature resistant elastic gasket and a number of sets of locking members; and

a lower end surface of the tube portion is welded to an upper surface of the sealing flange; a lower surface of the sealing flange is provided with a convex annular step, an end surface of the opening side of the lower head is provided with an annular groove, the high temperature resistant elastic gasket is disposed in the annular groove, and the annular step is abutted against the high temperature resistant elastic gasket and fits within the annular groove; the locking member extends through the sealing flange and the non-heating section of the lower head.

Preferably, a number of first locking holes are provided in the sealing flange spaced along a circumference direction of the sealing flange and extending through an upper surface and a lower surface thereof, the non-heating section of the lower head is provided with a number of second locking holes spaced along a circumference direction of the lower head and communicated with the first locking holes correspondingly, and the second locking hole extends downward to be communicated with the recess from the end surface of the opening side of the lower head.

Preferably, the annular groove is located outside the second locking hole.

Preferably, the high temperature resistant elastic gasket is a graphite gasket.

Preferably, the tube portion is a stainless-steel tube, and the lower head is a hemispherical copper shell.

The present invention further provides a three-dimensional test system for simulating RPV heat exchange characteristics of a nuclear power plant, wherein the three-dimensional test system includes the above three-dimensional test device, a pit simulator, an insulation layer simulator and a cooling tank simulator; the three-dimensional test device is configured as a RPV simulator and is suspended in the pit simulator, the insulation layer simulator is disposed on an outer periphery of the RPV simulator, and the cooling tank simulator is disposed on an outer periphery of an upper end of the RPV simulator; and

a cooling water flow channel is defined between the insulation layer simulator and the RPV simulator, and a water injection space is defined between the insulation layer simulator and an inner wall surface of the pit simulator; a water inlet communicating the cooling water flow channel with the water injection space is provided at a bottom of the insulation layer simulator, so that cooling water in the water injection space is able to enter the cooling water flow channel through the water inlet, and the cooling water is heated outside the lower head of the RPV simulator to generate a steam-water two-phase flow; an upper end of the insulation layer simulator is provided with an exhaust outlet communicated with the cooling water flow channel, the steam-water two-phase flow flows upward along the cooling water flow channel and then is separated to steam and water when flowing through the exhaust outlet, and the liquid water falls into the cooling tank simulator.

Preferably, the three-dimensional test device further includes a temperature measuring assembly disposed in the lower head, for monitoring a temperature change of the lower head.

Preferably, the temperature measuring assembly includes a number of sets of thermocouples, each set of thermocouples include two thermocouples, and the thermocouple is inserted in the lower head perpendicular to an inner wall surface of the lower head; and each set of thermocouples are arranged in a center position of a region surrounded by four heating holes.

Preferably, an inner wall surface of the lower head is provided with a number of temperature measuring holes along a spherical center direction of the lower head, and each thermocouple is inserted in the corresponding temperature measuring hole; depths of the two temperature measuring holes corresponding to each set of thermocouples are different.

Preferably, the depths of the two temperature measuring holes corresponding to each set of thermocouples are 102mm-107mm, 112 mm-117mm respectively.

Preferably, the cooling tank simulator includes an annular tank body with a liquid level thereof below the exhaust outlet, and a first heat exchanger disposed in the tank body and below the liquid level thereof.

Preferably, the cooling tank simulator further includes a spray mechanism and/or a second heat exchanger disposed in the tank body and located above the exhaust outlet.

Preferably, a pit wall of the pit simulator is provided with at least one water inlet communicated with the water injection space for accessing the cooling water.

Preferably, the pit simulator, the RPV simulator, the insulation layer simulator and the cooling tank simulator are arranged in a ratio of 1:5 to sizes of corresponding prototypes respectively.

Preferably, the three-dimensional test system further includes a water return line disposed outside the pit simulator; an upper end of the water return line is communicated with the cooling tank simulator, and a lower end of the water return line is communicated with the water injection space.

The present invention has the following beneficial effects: the present invention is configured to simulate a process that a high temperature core melt is transferred to a wall surface of the RPV(reactor pressure vessel) and flows outside the wall surface of the RPV under a severe accident condition of a nuclear power plant, so that to study the distribution of CHF(critical heat flux) and three-dimensional cooling water flow characteristics at different positions on an outer wall surface of the RPV under a three-dimensional flow condition, thereby providing data support for studying the effectiveness of a severe accident mitigation system -a pit water injection system.

**Brief Description of the Drawings**

The present invention will now be further described with reference to the accompanying drawings and embodiments, and in the drawings:

Fig. 1 is a schematic structural view of a test section of a two-dimensional heating test in a prior art;

Fig. 2 is a cross-sectional view of a three-dimensional test system according to an embodiment of the present invention;

Fig. 3 is a cross-sectional view of a three-dimensional test device of the three-dimensional test system in Fig. 2;

Fig. 4 is a cross-sectional view of a lower head of the three-dimensional test device in Fig. 3;

Fig. 5 is a schematic view of a heating section of the lower head in Fig. 4;

Fig. 6 is an enlarged schematic view of part A of the three-dimensional test device in Fig. 4; and

Fig. 7 is a partial cross-sectional view of the heating section of the lower head in Fig. 5.

**Preferred embodiments**

To clearly understand the technical features, objectives and effects of the invention, specific embodiments of the invention will now be described in detail with reference to the accompanying drawings.

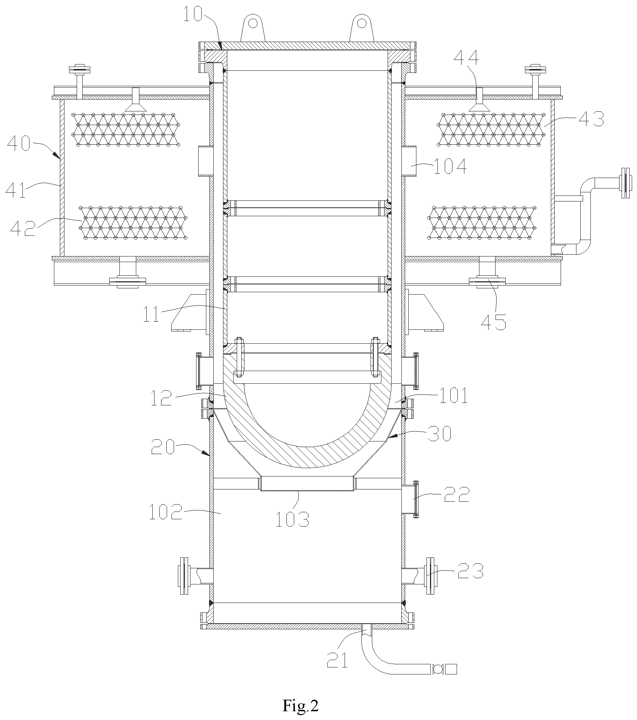

As shown in Fig. 2, a three-dimensional test system for simulating RPV heat exchange characteristics of a nuclear power plant in an embodiment of the present invention includes a three-dimensional test device 10, a pit simulator 20, an insulation layer simulator 30, and a cooling tank simulator 40. The three-dimensional test device 10 serves as a RPV simulator and is suspended in the pit simulator 20. The insulation layer simulator 30 is provided on an outer periphery of the RPV simulator. The cooling tank simulator 40 is disposed on an outer periphery of an upper end of the RPV simulator.

A cooling water flow channel 101 is defined between the insulation layer simulator 30 and the RPV simulator (the three-dimensional test device 10), and a water injection space 102 is defined between the insulation layer simulator 30 and an inner wall surface of the pit simulator 20. A water inlet 103 is provided at a bottom of the insulation layer simulator 30 and communicates the cooling water flow channel 101 with the water injection space 102, so that the cooling water in the water injection space 102 is able to enter the cooling water flow channel 101 through the water inlet 103. An upper end of the insulation layer simulator 30 is provided with an exhaust outlet 104 communicated with the cooling water flow channel 101. The cooling water in the cooling water flow channel 101 is heated outside the RPV simulator to form a steam-water two-phase flow, and the steam-water two-phase flow flows upward along the cooling water flow channel 101 and then is separated to steam and water when flowing through the exhaust outlet 104, and the liquid water falls into the cooling tank simulator 40.

As an embodiment, the pit simulator 20, the RPV simulator (the three-dimensional test device 10), the insulation layer simulator 30 and the cooling tank simulator 40 are respectively arranged in a ratio of 1:5 to the corresponding prototypes.

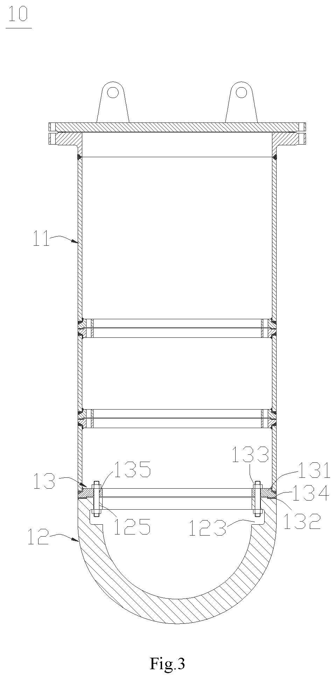

Wherein, the three-dimensional test device 10 serves as the RPV simulator and is configured to simulate heat exchange characteristics of the reactor pressure vessel (RPV) under an accident. As shown in Fig. 2 and Fig. 3, the three-dimensional test device 10 includes a tube portion 11, a hemispherical lower head 12, and a heating assembly (not shown in the drawings). The tube portion 11 is a non-heating portion, and an upper end thereof is enclosed by an end cover, etc. The lower head 12 is connected to a lower end of the tube portion 11 to enclose the lower end of the tube portion 11. The heating assembly is disposed in the lower head 12, enabling a three-dimensional heating portion formed on the lower head 12, thereby a heat transfer of the lower head of the RPV and a three-dimensional flow characteristics of an outer wall surface of the RPV can be completely simulated when a serious accident occurs. The cooling water in the cooling water flow channel 101 is generally heated outside the lower head 12 to generate a steam-water two-phase flow. The cooling water can flow in any direction outside a spherical surface of the lower head 12, thus a three-dimensional flow state of an outer wall surface of the lower head of the RPV is able to be simulated under a real condition, which is more consistent with the actual flow situation.

The tube portion 11 may be formed by two or more axial sections sequentially connected in an axial direction, thereby facilitating providing sufficient space for installing the heating assembly and arranging wires and the like, and realizing the operability for an operator.

Alternatively, in the three-dimensional test device 10, the tube portion 11 may be a stainless-steel tube, and the lower head 12 may be a hemispherical copper shell.

The heating assembly includes a number of heating rods to heat the lower head 12. The heating rods are inserted into the lower head 12 vertical to an inner wall surface of the lower head 12. By a uniform arrangement of a plurality of (eg. hundreds of, or thousands of) the heating rods in the lower head 12, regional fine heating can be achieved with a maximum heating heat flux of $2.0MW/m^2$.

As shown in Figs. 3 to 5, corresponding to the heating assembly, a number of heating holes 120 are uniformly provided in an inner wall surface of the lower head 12 along a spherical center direction of the lower head 12. The heating hole 120 is a blind hole not extending through an outer wall surface of the lower head 12. Each heating rod is inserted into a corresponding heating hole 120.

Since the heating hole 120 into which the heating rod is inserted is a blind hole, the processing and installation error of the heating rod and the heating hole 120 needs to be strictly controlled, to prevent the heating rod from being pushed out by remaining air in the blind hole when heating, and to ensure sufficient contact between the heating rod and an inner wall surface of the heating hole 120 when being expanded. By controlling a distance between the heating rod and the heating hole 120, the influence of the blind hole on ejection of the heating rod when being heated is achieved, and the heating expansion fitness is achieved, and the burnout possibility of the heating rod is effectively reduced.

Furthermore, in the three-dimensional test device 10, the lower head 12 is connected to the lower end of the tube portion 11 in a sealing mode. During a test process, the lower head 12 and the tube portion 11 are submerged in water, and a large number of heating rods are installed in the lower head 12. During the test operation, a body of the lower head 12 has a great temperature gradient and a sealing surface being deformed, thus a good sealing of a contact surface between the lower head 12 and the tube portion 11 is required, to prevent leakage of the contact surface from damaging the device.

To achieve a sealed connection between the lower head 12 and the tube portion 11, the three-dimensional test device 10 further includes a sealing assembly 13 disposed between the tube portion 11 and the lower head 12. To reduce the deformation of the sealing surface caused by the transmission of the heat generated by the heating assembly to the sealing assembly, the lower head 12 may include a non-heating section 121 and a heating section 122. The non-heating section 121 is located adjacent to and configured for being matched with the sealing assembly 13, and the heating section 122 is configured for installing the heating assembly therein. The heating hole 120 is defined in the heating section 122.

A thickness of the heating section 122 of the lower head 12 is determined by a length of the heating rod, a heating capacity, the number of the heating holes 120 and a required space of the heating holes 120. If the wall thickness of the heating section 122 is larger, then the length of the heating rod is larger, and the inner space of the heating section 122 is less, thus there is no enough space for drilling a larger number of the heating holes 120. If the wall thickness of the heating section 122 is smaller, then there is enough space inside the heating section 122 for drilling, but the heating capacity and the surface heating power of the heating rod have higher requirement since the length of the heating rod is smaller. Therefore, factors such as the heating design capacity of the heating rods and the number of the heating rods etc. should be fully considered in selecting the wall thickness of the heating section 122. The relationship of the thickness of the lower head 12 and the depth and the quantity of the heating hole 120 are mutual coupling: 1) when a radius of the lower head 12 is defined, the thickness of the lower head 12 determines the depth of the heating hole 120, and the installation spaces and amounts of the heating holes 120 and heating rod wires; 2) a diameter and a heating length of the heating rod are determined by a power, a heating section and a manufacturing process of the heating rod. The thickness of the lower head 12 and the depth and the quantity of the heating hole 120 can be determined by considering the above factors overall.

In the present embodiment, the wall thickness of the lower head 12 (the wall thickness of the heating section 122) is 100mm-120mm. The heating hole 120 has a depth of 85mm-100mm with a tolerance of $\pm$ 0.1mm, an inner diameter of 10mm-15mm with a tolerance of -0.00mm to +0.02mm, and a perpendicularity of 0.01mm. The inner wall surface of the heating hole 120 should be smooth, scratch free and has a roughness of <Ra1.6. Correspondingly, the heating rod has a total length of $\leq$ 120mm, a heating length of 80mm-90mm, and an outer diameter of 10mm-15mm with a tolerance of -0mm to +0.4mm. A rated power of the heating rod can be selected at ~1.8kW.

Specifically, the lower head 12 is provided with an annular recess 123 on an inner wall surface adjacent to an opening side thereof, and the lower head is separated by the recess 123 into the non-heating section 121 and the heating section 122 respectively on an upper side and a lower side of the recess 123. The lower head 12 is connected with the tube portion 11 via the non-heating section 121, and the heating assembly is disposed in the heating section 122. The heating section 122 occupies a large volume of the lower head 12 and is a hemispherical three-dimensional section. The non-heating section 121 and the heating section 122 are connected by a side wall thinned by the recess 123, thereby reducing a contact area between the non-heating section 121 and the heating section 122. The non-heating section 121 acts as an isolation function and provides conditions for the installation of the sealing assembly 13 at the same time.

In the heating section 122 of the lower head 12, a number of the heating rods are evenly spaced and inserted into the corresponding heating holes 120. The heating section 122 may further include a number of heating units, and each heating unit has a plurality of the heating rods therein. To facilitate a power control of each heating unit, the heating rods of different heating units may be connected to different power controllers according to the actual requirements. For example, the powers of the heating rods of the adjacent heating units are different, and by performing heating power controls of different units, to control the temperatures of different units in the entire heating section 122.

The sealing assembly 13 includes a sealing flange 131, a high temperature resistant elastic gasket 132 and a number of sets of locking members 133. The sealing flange 131 fits between the tube portion 11 and the lower head 12, and a lower end surface of the tube portion 11 is welded to an upper surface of the sealing flange 131. A lower surface of the sealing flange 131 cooperates with an end surface of the opening side of the lower head 12. Specifically, the lower surface of the sealing flange 131 is provided with a convex annular step 134, and the end surface of the opening side of the lower head 12 is provided with an annular groove 124. The high temperature resistant elastic gasket 132 is disposed in the annular groove 124, and the annular step 134 is tightly abutted against the high temperature resistant elastic gasket 132 and fits within the annular groove 124, to realize a concave-convex sealing fit between the sealing flange 131 and the lower head 12.

Preferably, in the present embodiment, the high temperature resistant elastic gasket 132 is a graphite gasket.

A number of sets of the locking members 133 are spaced distributed along a circumference direction of the sealing flange 131. Each set of locking member 133 extends through the sealing flange 131 and the non-heating section 121 of the lower head 12, to firmly lock the sealing flange 131 with the lower head 12, thereby to firmly lock the tube portion 11 with the lower head 12. The locking member 133 may include a bolt and at least one nut mating therewith.

Corresponding to the locking member 133, a number of first locking holes 135 are provided in the sealing flange 131 spaced along the circumference direction of the sealing flange 131 and extending through an upper surface and a lower surface thereof. The non-heating section 121 of the lower head 12 is provided with a number of second locking holes 125 spaced along the circumference direction of the lower head 12, and the second locking hole 125 is communicated with the first locking hole 135 correspondingly.

Wherein, the first locking hole 135 is located inside the annular step 134 along a radial direction of the sealing flange 131. Correspondingly, the second locking hole 125 is inside the annular groove 124 along a radial direction of the lower head 12. Otherwise, the annular groove 124 is located outside the second locking hole 125.

Particularly, the second locking hole 125 extends downward to be communicated with the recess 123 from the end surface of the opening side of the lower head 12, forming a shape of through hole. The second locking hole 125, of a through hole shape, enables a lower end of the bolt of the locking member 133 to extend into the recess 123, thereby a nut can be screwed with the lower end of the bolt, combined with a nut assembled on an upper end of the bolt, to form a double head locking. It provides a better bolt fastening than in a blind hole, and improves the fastening between the sealing flange 131 and the lower head 12.

Furthermore, since the heating section 122 of the lower head 12 is located below the recess 123, the recess 123 is able to reduce the heat transfer of the heating section 122 to a flange surface, thereby to decrease the expansion degree of the sealing flange 131, and to ensure the connection sealing performance.

Furthermore, the three-dimensional test device 10 further includes a temperature measuring assembly (not shown in the drawings) disposed in the lower head 12. The temperature measuring assembly is configured to monitor a temperature change in a wall thickness direction of the lower head 12 to monitor a surface temperature change of the lower head 12. Thereby, a real-time temperature measuring, a real-time monitor of a heating state and a stable measurement of a heat flux of different regions within a heating section 122 are realized, and the disturbance of a heating rod to the temperature measuring is avoided.

The temperature measuring assembly may include a number of sets of thermocouples, and each set of thermocouple includes two thermocouples. The thermocouples are inserted in the lower head 12 perpendicular to an inner wall surface of the lower head 12. Specifically, the thermocouple is inserted in the heating section 122 of the lower head 12.

Corresponding to the temperature measuring assembly, an inner wall surface of the lower head 12 is provided with a number of temperature measuring holes 126 along a spherical center direction of the lower head 12, and each thermocouple is inserted into a corresponding temperature measuring hole 126. Corresponding to two thermocouples being configured as one set, every two temperature measuring holes 126 are also configured as one set, and are arranged corresponding to the two thermocouples of each set of thermocouples. Depths of the two temperature measuring holes 126 corresponding to each set of thermocouples are different, so that insertion depths of the two thermocouples of each set of thermocouples are different and serve as a set of temperature measuring points.

In the present embodiment, corresponding to the wall thickness of the lower head 12, the depths of the two temperature measuring holes 126 corresponding to each set of thermocouples may be 102mm-107mm, 112 mm-117mm respectively.

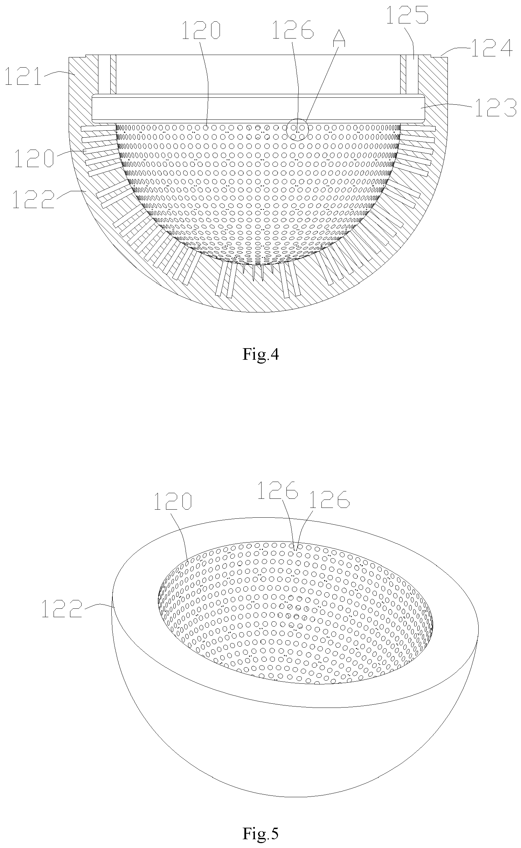

As shown in Figs. 4-6, in the present embodiment, the two temperature measuring holes 126 corresponding to each set of thermocouples are arranged in a center position of a region surrounded by four heating holes 120, so that each set of thermocouples is located in a center position of a region surrounded by four heating rods. In the lower head 12, the area enclosed by four heating rods has the largest space, thus to facilitate the arrangement and insertion of the thermocouples, and the four heating rods are of the same power.

The two thermocouples of each set of thermocouples are arranged along the spherical center direction with the same tilt angle.

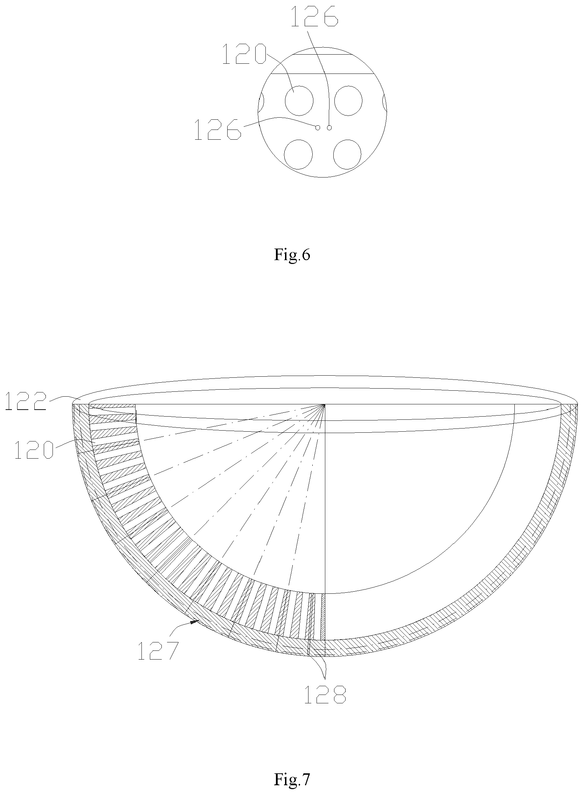

As shown in Fig. 7, by the insertion of the plurality of heating rods in the corresponding heating holes 120 and the uniform arrangement of the plurality of heating rods in the lower head 12, the heating section 122 of the lower head 12 can be divided into a plurality of equal temperature distribution regions 127 (the regions defined by dashed lines in Fig. 7) along the spherical center direction. In the lower head 12, the temperature measuring points of the two thermocouples 128 are arranged in the equal temperature distribution region 127, and the depths of the temperature measuring holes corresponding to the two thermocouples 128 are different.

During the test, a thermal flux qi of the equal temperature distribution region 127 is obtained by Fourier formula:

$$q_i = \bar{\lambda} \frac{t_i - t_o}{\Delta l}$$

In the above formula, $q_i$ is the thermal flux of the equal temperature distribution region 127, in W/m²; $t_i$ is a measured value of the thermocouple with a smaller depth of one set of thermocouples, and $t_0$ is a measured value of the thermocouple with a larger depth of one set of thermocouples; $\bar{\lambda}$ is a thermal conductivity (integral average) of a copper; and $\Delta l$ is a depth difference of the two thermocouples in one set of thermocouples, in mm.

Wherein $\bar{\lambda}$ is obtained by the following formula:

$$\bar{\lambda} = \frac{\int_{t_o}^{t_i} \lambda(t)}{t_i - t_o}$$

Furthermore, as shown in Fig. 2, in the three-dimensional test system, the cooling tank simulator 40 includes an annular tank body 41 disposed at an outer periphery of an upper end of the three-dimensional test device 10 and a first heat exchanger 42 disposed in the tank body 41.

The exhaust outlet 104 is communicated with an inner space of the tank body 41, and the liquid level of the tank body 41 is kept below the exhaust outlet 104 to keep the exhaust outlet 104 clear during the test. The first heat exchanger 42 is disposed below the liquid level in the tank body 41. The first heat exchanger 42 may include a plurality of cooling tubes for the cooling water flowing and heat exchanging with the water in the tank body 41. The cooling tube may be annularly arround the outer periphery of the upper end of the three-dimensional test device 10.

The cooling tank simulator 40 further includes a spray mechanism 44 and / or a second heat exchanger 43 disposed in the tank body 41 and located above the exhaust outlet 104, and is configured for cooling the vapor discharged from the exhaust outlet 104, so that the vapor condenses into liquid and falls into the tank body 41. The second heat exchanger 43 may be arranged with reference to the first heat exchanger 42.

A pit wall of the pit simulator 20 may be provided with at least one water inlet (not shown in the drawings) communicated with the water injection space 102 for accessing cooling water. During the test, the cooling water is fed into the water injection space 102 through the water inlet. When the test is finished, the water inlet may act as a water outlet to drain off water, or a water outlet 21 can be provided at a bottom of the pit simulator 20 to drain off water. Of course, the cooling water may alternatively be fed into the tank body 41 through the spray mechanism 44 of the cooling tank simulator 40 or a interface of the tank body 41, and then the cooling water flows into the water injection space 102.

To facilitate observing the inner condition of the pit simulator 20 during the test, at least one observing window 22 may be provided on a pit wall of the pit simulator 20. Observing window may also be provided on a wall surface of the tank body 41 of the cooling tank simulator 40.

Furthermore, the three-dimensional test system of the invention further includes a water return line (not shown in the drawings) disposed outside the pit simulator 20. An upper end of the water return line is communicated with the cooling tank simulator 40, and a lower end of the water return line is communicated with the water injection space 102. Corresponding to the water return line, a first interface 45 is provided at a lower end of the tank body 41 of the cooling tank simulator 40, and a second interface 23 is provided at a lower end of a pit wall of the pit simulator 20, and the water return line is formed by communicating the pipe between the first interface 45 and the second interface 23. During the test, the cooling water of the tank body 41 can flow back into the water injection space 102 through the water return line.

The three-dimensional test system of the present invention can simulate a whole process of a pit water injection of a nuclear power plant when a severe accident occurs, mainly simulate a process and a flow direction of the cooling water when being injected into the pit and then being heated in the channel outside the lower head of the RPV and the insulation layer of the RPV to form steam-water two-phase flow, and obtain the heat flux of the lower head by real time monitor, thereby the heating characteristics of different regions of a wall surface of the RPV and the two-phase flow characteristics of an outer wall surface of the lower head of the RPV can be studied. Meanwhile, a test, such as a CHF experiment under natural cycle and forced cycle conditions, or a temperature response test under false water injection condition or the like, can be conducted.

The above are only embodiments of the present invention, and thus do not limit the scope of the present invention. Any equivalent structure or equivalent process made by referencing the description and drawings of the present invention, or directly or indirectly applied in other related technical fields, shall fall within the scope of the present invention.

**Claims**

1. A three-dimensional test device (10), for simulating reactor pressure vessel, RPV, heat exchange characteristics when an accident occurs, wherein the three-dimensional test device (10) comprises a tube portion (11), a lower head (12) that is hemispherical and connected to a lower end of the tube portion, and a heating assembly disposed in the lower head; and wherein

   the tube portion (11) is a non-heating portion; and the heating assembly is disposed in the lower head (12) to form a three-dimensional heating portion,
   wherein the lower head (12) is provided with an annular recess (123) on an inner wall surface adjacent to an opening side,
   **characterised in that** the lower head (12) is separated by the recess (123) into a non-heating section (121) and a heating section (122) respectively on an upper side and a lower side of the recess (123); the lower head (12) is connected with the tube portion (11) via the non-heating section (121), and the heating assembly is disposed in the heating section (122).

2. The three-dimensional test device according to claim 1, wherein the heating assembly comprises a number of heating rods to heat the lower head (12), and the heating rods are inserted into the lower head (12) perpendicular to an inner wall surface of the lower head (12).

3. The three-dimensional test device according to claim 2, wherein a number of heating holes (120) are uniformly provided in an inner wall surface of the lower head (12) along a spherical center direction of the lower head (12); and each heating rod is inserted in a corresponding heating hole (120).

4. The three-dimensional test device according to claim 3, wherein a wall thickness of the lower head (12) is 100mm-120mm; a depth of the heating hole (120) is 85mm-100mm, and an inner diameter of the heating hole (120) is 10mm-15mm; and a total length of the heating rod is ≤ 120mm, a heating length of the heating rod is 80mm-90mm, and an outer diameter of the heating rod is 10mm -15mm.

5. The three-dimensional test device according to claim 1, wherein the heating section (122) comprises a number of heating units, and each heating unit has a plurality of the heating rods therein; wherein the heating rods are configured so that powers of the heating rods of the adjacent heating units are different.

6. The three-dimensional test device according to claim 1, wherein the three-dimensional test device (10) further comprises a sealing assembly (13) disposed between the tube portion (11) and the lower head (12); and the sealing assembly (13) comprises a sealing flange (131), a high temperature resistant elastic gasket (132) and a number of sets of locking members (133); and

   a lower end surface of the tube portion (11) is welded to an upper surface of the sealing flange (131); a lower surface of the sealing flange (131) is provided with a convex annular step (134), an end surface of the opening side of the lower head (12) is provided with an annular groove (124), the high temperature resistant elastic gasket (132) is disposed in the annular groove (124), and the annular step (134) is abutted against the high temperature resistant elastic gasket (132) and fits within the annular groove (124); the locking member (133) extends through the sealing flange (131) and the non-heating section (121) of the lower head (12).

7. The three-dimensional test device according to claim 6, wherein a number of first locking holes (135) are provided in the sealing flange (131) spaced along a circumference direction of the sealing flange (131) and extending through an upper surface and a lower surface thereof, the non-heating section (121) of the lower head (12) is provided with a number of second locking holes (125) spaced along a circumference direction of the lower head (12) and communicated with the first locking holes (135) correspondingly, and the second locking hole (125) extends downward to be communicated with the recess (123) from the end surface of the opening side of the lower head (12).

8. The three-dimensional test device according to claim 7, wherein the annular groove (124) is located outside the second locking hole (125).

9. The three-dimensional test device according to claim 6, wherein the high temperature resistant elastic gasket (132) is a graphite gasket.

10. The three-dimensional test device according to any one of claims 1 to 9, wherein the tube portion (11) is a stainless-steel tube, and the lower head (12) is a hemispherical copper shell.

11. A three-dimensional test system for simulating RPV heat exchange characteristics of a nuclear power plant, wherein the three-dimensional test system comprises the three-dimensional test device (10) according to any one of claims 1 to 10, a pit simulator (20), an insulation layer simulator (30) and a cooling tank simulator (40); the three-dimensional test device (10) is configured as a RPV simulator and is suspended in the pit simulator (20), the insulation layer simulator (30) is disposed on an outer periphery of the RPV simulator, and the cooling tank simulator (40) is disposed on an outer periphery of an upper end of the RPV simulator; and

a cooling water flow channel (101) is defined between the insulation layer simulator (30) and the RPV simulator, and a water injection space (102) is defined between the insulation layer simulator (30) and an inner wall surface of the pit simulator (20); a water inlet (103) communicating the cooling water flow channel (101) with the water injection space (102) is provided at a bottom of the insulation layer simulator (30), so that cooling water in the water injection space (102) is able to enter the cooling water flow channel (101) through the water inlet (103), and the cooling water is heated outside the lower head of the RPV simulator to generate a steam-water two-phase flow; an upper end of the insulation layer simulator (30) is provided with an exhaust outlet (104) communicated with the cooling water flow channel (101), the steam-water two-phase flow flows upward along the cooling water flow channel (101) and then is separated to steam and water when flowing through the exhaust outlet (104), and the liquid water falls into the cooling tank simulator (40).

12. The three-dimensional test system according to claim 11, wherein the three-dimensional test device (10) further comprises a temperature measuring assembly disposed in the lower head (12), for monitoring a temperature change of the lower head (12).

13. The three-dimensional test system according to claim 12, wherein the temperature measuring assembly comprises a number of sets of thermocouples, each set of thermocouples comprise two thermocouples, and the thermocouple is inserted in the lower head (12) perpendicular to an inner wall surface of the lower head (12); and each set of thermocouples are arranged in a center position of a region surrounded by four heating holes.

14. The three-dimensional test system according to claim 13, wherein an inner wall surface of the lower head (12) is provided with a number of temperature measuring holes (126) along a spherical center direction of the lower head (12), and each thermocouple is inserted in the corresponding temperature measuring hole (126); depths of the two temperature measuring holes (126) corresponding to each set of thermocouples are different.

15. The three-dimensional test system according to claim 14, wherein the depths of the two temperature measuring holes (126) corresponding to each set of thermocouples are 102mm-107mm, 112 mm-117mm respectively.

16. The three-dimensional test system according to claim 11, wherein the cooling tank simulator (40) comprises an annular tank body (41) with a liquid level thereof below the exhaust outlet (104), and a first heat exchanger (42) disposed in the tank body (41) and below the liquid level thereof.

17. The three-dimensional test system according to claim 16, wherein the cooling tank simulator (40) further comprises a spray mechanism (44) and/or a second heat exchanger (43) disposed in the tank body (41) and located above the exhaust outlet (104).

18. The three-dimensional test system according to claim 11, wherein a pit wall of the pit simulator (20) is provided with at least one water inlet communicated with the water injection space (102) for accessing the cooling water.

19. The three-dimensional test system according to any one of claims 11 to 18, wherein the pit simulator (20), the RPV simulator, the insulation layer simulator (30) and the cooling tank simulator (40) are arranged in a ratio of 1:5 to sizes of corresponding prototypes respectively.

20. The three-dimensional test system according to any one of claims 11 to 18, wherein the three-dimensional test system further comprises a water return line disposed outside the pit simulator (20); an upper end of the water return line is communicated with the cooling tank simulator (40), and a lower end of the water return line is communicated with the water injection space (102).

**Patentansprüche**

1. Dreidimensionale Prüfvorrichtung (10) zum Simulieren der Wärmeaustauschcharakteristika eines Reaktordruckbehälters (reactor pressure vessel - RPV) bei einem Unfall, wobei die dreidimensionale Prüfvorrichtung (10) einen Rohrabschnitt (11), einen unteren Kopf (12), der halbkugelförmig ist und mit einem unteren Ende des Rohrabschnitts verbunden ist, und eine Heizbaugruppe umfasst, die in dem unteren Kopf angeordnet ist; und wobei

der Rohrabschnitt (11) ein Nichtheizabschnitt ist; und die Heizbaugruppe in dem unteren Kopf (12) angeordnet ist, um einen dreidimensionalen Heizabschnitt zu bilden, wobei der untere Kopf (12) mit einer ringförmigen Aussparung (123) auf einer Innenwandfläche benachbart zu einer Öffnungsseite bereitgestellt ist, **dadurch gekennzeichnet, dass** der untere Kopf (12) durch die Aussparung (123) in einen Nichtheizabschnitt (121) und einen Heizabschnitt (122) jeweils auf einer Oberseite und einer Unterseite der Aussparung (123) unterteilt ist; wobei der untere Kopf (12) über den Nichtheizabschnitt (121) mit dem Rohrabschnitt (11) verbunden ist und die Heizbaugruppe in dem Heizabschnitt (122) angeordnet ist.

2. Dreidimensionale Prüfvorrichtung nach Anspruch 1, wobei die Heizbaugruppe eine Anzahl von Heizstäben zum Erhitzen des unteren Kopfes (12) umfasst und die Heizstäbe senkrecht zu einer Innenwandfläche des unteren Kopfes (12) in den unteren Kopf (12) eingesetzt sind.

3. Dreidimensionale Prüfvorrichtung nach Anspruch 2, wobei eine Anzahl von Heizlöchern (120) gleichmäßig in einer Innenwandfläche des unteren Kopfes (12) entlang einer Kugelmittelrichtung des unteren Kopfes (12) bereitgestellt ist; und wobei jeder Heizstab in ein entsprechendes Heizloch (120) eingesetzt ist.

4. Dreidimensionale Prüfvorrichtung nach Anspruch 3, wobei eine Wandstärke des unteren Kopfes (12) 100 mm-120 mm beträgt; eine Tiefe des Heizlochs (120) 85 mm-100 mm beträgt und ein Innendurchmesser des Heizlochs (120) 10 mm-15 mm beträgt; und wobei eine Gesamtlänge des Heizstabs $\leq$ 120 mm beträgt, eine Heizlänge des Heizstabs 80 mm-90 mm beträgt und ein Außendurchmesser des Heizstabs 10 mm-15 mm beträgt.

5. Dreidimensionale Prüfvorrichtung nach Anspruch 1, wobei der Heizabschnitt (122) eine Anzahl von Heizeinheiten umfasst und jede Heizeinheit eine Vielzahl von Heizstäben darin aufweist; wobei die Heizstäbe so konfiguriert sind, dass die Leistungen der Heizstäbe der benachbarten Heizeinheiten unterschiedlich sind.

6. Dreidimensionale Prüfvorrichtung nach Anspruch 1, wobei die dreidimensionale Prüfvorrichtung (10) ferner eine Dichtungsbaugruppe (13) umfasst, die zwischen dem Rohrabschnitt (11) und dem unteren Kopf (12) angeordnet ist; und wobei die Dichtungsbaugruppe (13) einen Dichtungsflansch (131), eine hochtemperaturbeständige elastische Dichtung (132) und eine Anzahl von Sätzen von Verriegelungselementen (133) umfasst; und wobei eine untere Endfläche des Rohrabschnitts (11) mit einer oberen Fläche des Dichtungsflansches (131) verschweißt ist; eine untere Fläche des Dichtungsflansches (131) mit einer konvexen ringförmigen Stufe (134) bereitgestellt ist, eine Endfläche der Öffnungsseite des unteren Kopfes (12) mit einer ringförmigen Nut (124) bereitgestellt ist, die hochtemperaturbeständige elastische Dichtung (132) in der ringförmigen Nut (124) angeordnet ist und die ringförmige Stufe (134) an die hochtemperaturbeständige elastische Dichtung (132) angrenzt und in die ringförmige Nut (124) passt; wobei sich das Verriegelungselement (133) durch den Dichtungsflansch (131) und den Nichtheizabschnitt (121) des unteren Kopfes (12) erstreckt.

7. Dreidimensionale Prüfvorrichtung nach Anspruch 6, wobei eine Anzahl erster Verriegelungslöcher (135) in dem Dichtungsflansch (131) bereitgestellt ist, die entlang einer Umfangsrichtung des Dichtungsflansches (131) beabstandet sind und sich durch eine obere Fläche und eine untere Fläche davon erstrecken, wobei der Nichtheizabschnitt (121) des unteren Kopfes (12) mit einer Anzahl zweiter Verriegelungslöcher (125) bereitgestellt ist, die entlang einer Umfangsrichtung des unteren Kopfes (12) beabstandet sind und entsprechend mit den ersten Verriegelungslöchern (135) in Verbindung stehen, und sich das zweite Verriegelungsloch (125) nach unten erstreckt, um von der Endoberfläche der Öffnungsseite des unteren Kopfes (12) aus mit der Aussparung (123) in Verbindung zu stehen.

8. Dreidimensionale Prüfvorrichtung nach Anspruch 7, wobei die ringförmige Nut (124) außerhalb des zweiten Verriegelungslochs (125) angeordnet ist.

9. Dreidimensionale Prüfvorrichtung nach Anspruch 6, wobei die hochtemperaturbeständige elastische Dichtung (132) eine Graphitdichtung ist.

10. Dreidimensionale Prüfvorrichtung nach einem der Ansprüche 1 bis 9, wobei der Rohrabschnitt (11) ein Edelstahlrohr und der untere Kopf (12) eine halbkugelförmige Kupferschale ist.

11. Dreidimensionales Prüfsystem zum Simulieren von RPV-Wärmetauschcharakteristika eines Kernkraftwerks, wobei das dreidimensionale Prüfsystem die dreidimensionale Prüfvorrichtung (10) nach einem der Ansprüche 1 bis 10, einen Grubensimulator (20), einen Isolationsschichtsimulator (30) und einen Kühltanksimulator (40) umfasst; wobei die dreidimensionale Prüfvorrichtung (10) als RPV-Simulator konfiguriert ist und in dem Grubensimulator (20) aufgehängt ist, der Isolationsschichtsimulator (30) an einem äußeren Umfang des RPV-Simulators angeordnet ist und der Kühltanksimulator (40) an einem äußeren Umfang eines oberen Endes des RPV-Simulators angeordnet ist; und wobei zwischen dem Isolierschichtsimulator (30) und dem RPV-Simulator ein Kühlwasserströmungskanal (101) definiert ist und zwischen dem Isolierschichtsimulator (30) und einer Innenwandoberfläche des Grubensimulators (20) ein Wassereinspritzraum (102) definiert ist; wobei an einem Boden des Isolierschichtsimulators (30) ein Wassereinlass (103) bereitgestellt ist, der den Kühlwasserströmungskanal (101) mit dem Wassereinspritzraum (102) verbindet, sodass Kühlwasser in dem Wassereinspritzraum (102) durch den Wassereinlass (103) in den Kühlwasserströmungskanal (101) eintreten kann, und wobei das Kühlwasser außerhalb des unteren Kopfes des RPV-Simulators erhitzt wird, um eine Dampf-Wasser-Zweiphasenströmung zu erzeugen; wobei ein oberes Ende des Isolierschichtsimulators (30) mit einem Abgasauslass (104) bereitgestellt ist, der mit dem Kühlwasserströmungskanal (101) in Verbindung steht, der Dampf-Wasser-Zweiphasenstrom nach oben entlang des Kühlwasserströmungskanals (101) fließt und dann in Dampf und Wasser getrennt wird, wenn er durch den Abgasauslass (104) fließt, und das flüssige Wasser in den Kühltanksimulator (40) fällt.

12. Dreidimensionales Prüfsystem nach Anspruch 11, wobei die dreidimensionale Prüfvorrichtung (10) ferner eine in dem unteren Kopf (12) angeordnete Temperaturmessbaugruppe zum Überwachen einer Temperaturänderung des unteren Kopfes (12) umfasst.

13. Dreidimensionales Prüfsystem nach Anspruch 12, wobei die Temperaturmessbaugruppe eine Anzahl von Sätzen von Thermoelementen umfasst, jeder Satz von Thermoelementen zwei Thermoelemente umfasst und das Thermoelement senkrecht zu einer Innenwandfläche des unteren Kopfes (12) in den unteren Kopf (12) eingesetzt ist; und wobei jeder Satz von Thermoelementen in einer Mittelposition eines Bereichs angeordnet ist, der von vier Heizlöchern umgeben ist.

14. Dreidimensionales Prüfsystem nach Anspruch 13, wobei eine Innenwandfläche des unteren Kopfes (12) mit einer Anzahl von Temperaturmesslöchern (126) entlang einer Kugelmittelrichtung des unteren Kopfes (12) bereitgestellt ist und jedes Thermoelement in das entsprechende Temperaturmessloch (126) eingesetzt ist; wobei die Tiefen der beiden Temperaturmesslöcher (126), die jedem Satz von Thermoelementen entsprechen, unterschiedlich sind.

15. Dreidimensionales Prüfsystem nach Anspruch 14, wobei die Tiefen der beiden Temperaturmesslöcher (126), die jedem Satz von Thermoelementen entsprechen, 102 mm-107 mm bzw. 112 mm-117 mm betragen.

16. Dreidimensionales Prüfsystem nach Anspruch 11, wobei der Kühltanksimulator (40) einen ringförmigen Tankkörper (41) mit einem Flüssigkeitsniveau unterhalb des Abgasauslasses (104) und einen ersten Wärmetauscher (42) umfasst, der in dem Tankkörper (41) und unterhalb von dessen Flüssigkeitsniveau angeordnet ist.

17. Dreidimensionales Prüfsystem nach Anspruch 16, wobei der Kühltanksimulator (40) ferner einen Sprühmechanismus (44) und/oder einen zweiten Wärmetauscher (43) umfasst, der in dem Tankkörper (41) angeordnet und über dem Abgasauslass (104) angeordnet ist.

18. Dreidimensionales Prüfsystem nach Anspruch 11, wobei eine Grubenwand des Grubensimulators (20) mit mindestens einem Wassereinlass bereitgestellt ist, der mit dem Wassereinspritzraum (102) zum Zugang auf das Kühlwasser verbunden ist.

19. Dreidimensionale Prüfsystem nach einem der Ansprüche 11 bis 18, wobei der Grubensimulator (20), der RPV-Simulator, der Isolierschichtsimulator (30) und der Kühltanksimulator (40) in einem Verhältnis von 1:5 zu den Größen der entsprechenden Prototypen angeordnet sind.

20. Dreidimensionales Prüfsystem nach einem der Ansprüche 11 bis 18, wobei das dreidimensionale Prüfsystem ferner eine Wasserrücklaufleitung umfasst, die außerhalb des Grubensimulators (20) angeordnet ist; wobei ein oberes Ende der Wasserrücklaufleitung mit dem Kühltanksimulator (40) verbunden ist und ein unteres Ende der Wasserrücklaufleitung mit dem Wassereinspritzraum (102) verbunden ist.

## Revendications

1. Dispositif d'essai tridimensionnel (10), destiné à simuler les caractéristiques d'échange de chaleur d'une cuve sous pression de réacteur, RPV, lorsqu'un accident se produit, dans lequel le dispositif d'essai tridimensionnel (10) comprend une partie de tube (11), une tête inférieure (12) qui est hémisphérique et reliée à une extrémité inférieure de la partie de tube, et un ensemble chauffant disposé dans la tête inférieure ; et dans lequel

la partie de tube (11) est une partie non chauffante ; et l'ensemble chauffant est disposé dans la tête inférieure (12) pour former une partie chauffante tridimensionnelle, dans lequel la tête inférieure (12) est dotée d'un évidement annulaire (123) sur une surface de paroi interne adjacente à un côté d'ouverture, **caractérisé en ce que** la tête inférieure (12) est séparée par l'évidement (123) en une section non chauffante (121) et une section chauffante (122) respectivement sur un côté supérieur et un côté inférieur de l'évidement (123) ; la tête inférieure (12) est reliée à la partie de tube (11) par la section non chauffante (121), et l'ensemble chauffant est disposé dans la section chauffante (122).

2. Dispositif d'essai tridimensionnel selon la revendication 1, dans lequel l'ensemble chauffant comprend un certain nombre de tiges chauffantes pour chauffer la tête inférieure (12), et les tiges chauffantes sont insérées dans la tête inférieure (12) perpendiculairement à une surface de paroi interne de la tête inférieure (12).

3. Dispositif d'essai tridimensionnel selon la revendication 2, dans lequel un certain nombre de trous de chauffage (120) sont uniformément prévus dans une surface de paroi interne de la tête inférieure (12) le long d'une direction centrale sphérique de la tête inférieure (12) ; et chaque tige chauffante est insérée dans un trou de chauffage correspondant (120) .

4. Dispositif d'essai tridimensionnel selon la revendication 3, dans lequel une épaisseur de paroi de la tête inférieure (12) est de 100 mm à 120 mm ; une profondeur du trou de chauffage (120) est de 85 mm à 100 mm, et un diamètre intérieur du trou de chauffage (120) est de 10 mm à 15 mm ; et une longueur totale de la tige chauffante est ≤ 120 mm, une longueur de chauffage de la tige chauffante est de 80 mm à 90 mm, et un diamètre extérieur de la tige chauffante est de 10 mm à 15 mm.

5. Dispositif d'essai tridimensionnel selon la revendication 1, dans lequel la section chauffante (122) comprend un certain nombre d'unités chauffantes, et chaque unité chauffante contient une pluralité de tiges chauffantes ; dans lequel les tiges chauffantes sont configurées de sorte que les puissances des tiges chauffantes des unités chauffantes adjacentes sont différentes.

6. Dispositif d'essai tridimensionnel selon la revendication 1, dans lequel le dispositif d'essai tridimensionnel (10) comprend en outre un ensemble d'étanchéité (13) disposé entre la partie de tube (11) et la tête inférieure (12) ; et l'ensemble d'étanchéité (13) comprend une bride d'étanchéité (131), un joint élastique résistant aux températures élevées (132) et un certain nombre d'ensembles d'éléments de verrouillage (133) ; et
une surface d'extrémité inférieure de la partie tube (11) est soudée à une surface supérieure de la bride d'étanchéité (131) ; une surface inférieure de la bride d'étanchéité (131) est dotée d'une marche annulaire convexe (134), une surface d'extrémité du côté d'ouverture de la tête inférieure (12) est dotée d'une rainure annulaire (124), le joint élastique résistant aux températures élevées (132) est disposé dans la rainure annulaire (124), et la marche annulaire (134) vient en butée contre le joint élastique résistant aux températures élevées (132) et s'ajuste à l'intérieur de la rainure annulaire (124) ; l'élément de verrouillage (133) s'étend à travers la bride d'étanchéité (131) et la section non chauffante (121) de la tête inférieure (12) .

7. Dispositif d'essai tridimensionnel selon la revendication 6, dans lequel un certain nombre de premiers trous de verrouillage (135) sont prévus dans la bride d'étanchéité (131) espacés le long d'une direction circonférentielle de la bride d'étanchéité (131) et s'étendant à travers une surface supérieure et une surface inférieure de celle-ci, la section non chauffante (121) de la tête inférieure (12) est dotée d'un certain nombre de seconds trous de verrouillage (125) espacés le long d'une direction circonférentielle de la tête inférieure (12) et communiquant avec les premiers trous de verrouillage (135) de manière correspondante, et le second trou de verrouillage (125) s'étend vers le bas pour communiquer avec l'évidement (123) depuis la surface d'extrémité du côté d'ouverture de la tête inférieure (12).

8. Dispositif d'essai tridimensionnel selon la revendication 7, dans lequel la rainure annulaire (124) est située à l'extérieur du second trou de verrouillage (125).

9. Dispositif d'essai tridimensionnel selon la revendication 6, dans lequel le joint élastique résistant aux températures élevées (132) est un joint en graphite.

10. Dispositif d'essai tridimensionnel selon l'une quelconque des revendications 1 à 9, dans lequel la partie de tube (11) est un tube en acier inoxydable, et la tête inférieure (12) est une coque hémisphérique en cuivre.

11. Système d'essai tridimensionnel destiné à simuler les caractéristiques d'échange de chaleur d'une RPV d'une centrale nucléaire, dans lequel le système d'essai tridimensionnel comprend le dispositif d'essai tridimensionnel (10) selon l'une quelconque des revendications 1 à 10, un simulateur de fosse (20), un simulateur de couche isolante (30) et un simulateur de réservoir de refroidissement (40) ; le dispositif d'essai tridimensionnel (10) est configuré comme un simulateur RPV et est suspendu dans le simulateur de fosse (20), le simulateur de couche isolante (30) est disposé sur une périphérie externe du simulateur RPV, et le simulateur de réservoir de refroidissement (40) est disposé sur une périphérie externe d'une extrémité supérieure du simulateur RPV ; et
un canal d'écoulement d'eau de refroidissement (101) est défini entre le simulateur de couche isolante (30) et le simulateur RPV, et un espace d'injection d'eau (102) est défini entre le simulateur de couche isolante (30) et une surface de paroi interne du simulateur de fosse (20) ; une entrée d'eau (103) faisant communiquer le canal d'écoulement d'eau de refroidissement (101) avec l'espace d'injection d'eau (102) est prévue au fond du simulateur de couche isolante (30), de sorte que l'eau de refroidissement dans l'espace d'injection d'eau (102) est en mesure d'entrer dans le canal d'écoulement d'eau de refroidissement (101) par l'entrée d'eau (103), et l'eau de refroidissement est chauffée à l'extérieur de la tête inférieure du simulateur RPV pour générer un écoulement diphasique vapeur-eau ; une extrémité supérieure du simulateur de couche isolante (30) est dotée d'une sortie d'échappement (104) en communication avec le canal d'écoulement d'eau de refroidissement (101), l'écoulement diphasique vapeur-eau s'écoule vers le haut le long du canal d'écoulement d'eau de refroidissement (101), puis est séparé en vapeur et en eau lorsqu'il s'écoule par la sortie d'échappement (104), et l'eau liquide tombe dans le simulateur de réservoir de refroidissement (40).

12. Système d'essai tridimensionnel selon la revendication 11, dans lequel le dispositif d'essai tridimensionnel (10) comprend en outre un ensemble de mesure de température disposé dans la tête inférieure (12), pour surveiller un changement de température de la tête inférieure (12).

13. Système d'essai tridimensionnel selon la revendication 12, dans lequel l'ensemble de mesure de température comprend un certain nombre d'ensembles de thermocouples, chaque ensemble de thermocouples comprend deux thermocouples, et le thermocouple est inséré dans la tête inférieure (12) perpendiculairement à une surface de paroi interne de la tête inférieure (12) ; et chaque ensemble de thermocouples est agencé dans une position centrale d'une région entourée de quatre trous de chauffage.

14. Système d'essai tridimensionnel selon la revendication 13, dans lequel une surface de paroi interne de la tête inférieure (12) est dotée d'un certain nombre de trous de mesure de température (126) le long d'une direction centrale sphérique de la tête inférieure (12), et chaque thermocouple est inséré dans le trou de mesure de température correspondant (126) ; les profondeurs des deux trous de mesure de température (126) correspondant à chaque ensemble de thermocouples sont différentes.

15. Système d'essai tridimensionnel selon la revendication 14, dans lequel les profondeurs des deux trous de mesure de température (126) correspondant à chaque ensemble de thermocouples sont respectivement de 102 mm à 107 mm, de 112 mm à 117 mm.

16. Système d'essai tridimensionnel selon la revendication 11, dans lequel le simulateur de réservoir de refroidissement (40) comprend un corps de réservoir annulaire (41) avec un niveau de liquide de celui-ci en dessous de la sortie d'échappement (104), et un premier échangeur de chaleur (42) disposé dans le corps de réservoir (41) et en dessous du niveau de liquide de celui-ci .

17. Système d'essai tridimensionnel selon la revendication 16, dans lequel le simulateur de réservoir de refroidissement (40) comprend en outre un mécanisme de pulvérisation (44) et/ou un second échangeur de chaleur (43) disposé dans le corps de réservoir (41) et situé au-dessus de la sortie d'échappement (104) .

18. Système d'essai tridimensionnel selon la revendication 11, dans lequel une paroi de fosse du simulateur de fosse (20) est dotée d'au moins une entrée d'eau en communication avec l'espace d'injection d'eau (102) pour accéder à l'eau de refroidissement.

19. Système d'essai tridimensionnel selon l'une quelconque des revendications 11 à 18, dans lequel le simulateur de fosse (20), le simulateur RPV, le simulateur de couche isolante (30) et le simulateur de réservoir de refroidissement (40) sont agencés selon un rapport de 1:5 par rapport aux tailles des prototypes correspondants respectivement.

20. Système d'essai tridimensionnel selon l'une quelconque des revendications 11 à 18, dans lequel le système d'essai tridimensionnel comprend en outre une conduite de retour d'eau disposée à l'extérieur du simulateur de fosse (20) ; une extrémité supérieure de la conduite de retour d'eau est en communication avec le simulateur de réservoir de refroidissement (40), et une extrémité inférieure de la conduite de retour d'eau est en communication avec l'espace d'injection d'eau (102).

Fig.1

Fig.2

10

11

13

135

133

131

134

132

125

123

12

Fig.3

Fig.4

Fig.5

Fig.6

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20100125147 A

- CN 103594133 B

**Non-patent literature cited in the description**

- **NOH SANG W et al.** Critical heat flux for APR1400 lower head vessel during a severe accident. *NUCLEAR ENGINEERING AND DESIGN, AMSTERDAM, NL,* 05 March 2013, vol. 258, 116-129